# EUROPEAN PATENT APPLICATION

(11) **EP 2 778 989 A2**
(43) Date of publication of application: **17.09.2014**
(21) Application number: 14160079.1
(22) Date of filing: 14.03.2014
(51) Int. Cl.: G06F 17/30

(54) **Application information processing method and apparatus of mobile terminal**

(30) Priority: 14.03.2013 KR 20130027589
(71) Applicant: Samsung Electronics Co., Ltd., Suwon-si Gyeonggi-do 443-742 (KR)
(72) Inventor: Jang, Sihak, 443-742 Gyeonggi-do (KR); Kim, Kyunghwa, 443-742 Gyeonggi-do (KR); Kim, Seonhwa, 443-742 Gyeonggi-do (KR); Park, Mijung, 443-742 Gyeonggi-do (KR); Oh, Saegee, 443-742 Gyeonggi-do (KR); Choi, Joah, 443-742 Gyeonggi-do (KR)
(74) Representative: Gover, Richard Paul

(57) **Abstract**

An apparatus and method for associating information recognized from an image with an interoperating application are provided. The application information processing method of a mobile terminal includes displaying, when a camera application is running, a preview image input through a camera, presenting recognition information on a part selected from the preview image as information of an interoperation application, and associating the recognition information with the interoperating application.

## Description

### BACKGROUND

### 1. Field of the Invention

The present invention relates generally to an information-processing apparatus and method of a mobile terminal and, more particularly, to an apparatus and method for associating information recognized from an image with an interoperating application.

### 2. Description of the Related Art

Typically, a data processing device includes a processor for executing loaded applications under the control of an Operating System (OS). When a specific application is executed by the processor, it is necessary to guarantee security of the resource of the data processing device in association with the corresponding application.

When executing two or more applications with the screen split to display the application-specific execution windows, the applications are running independently. That is, the conventional method is focused on multi-tasking for executing multiple applications simultaneously and independently.

In the state where an application is running on the mobile terminal, if other related applications are executed, the conventional method provides no way of sharing the information among the applications running simultaneously. For example, the information on the image which has been acquired by a camera application cannot be shared with other currently running applications.

### SUMMARY

The present invention has been made to address at least the problems and disadvantages described above, and to provide at least the advantages set forth below. Accordingly, an aspect of the present invention provides an apparatus and method for interoperating plural applications through exchange of contents and/or commands among the applications of which execution screens are presented on a single screen.

Another aspect of the present invention provides an apparatus and method for executing a camera application and other applications simultaneously or sequentially, recognizing information on a camera preview displayed by the camera application in real time, and applying the information recognized from the camera preview to the applications running on the same screen.

In accordance with an aspect of the present invention, an application information processing method of a mobile terminal is provided. The method includes displaying, when a camera application is running, a preview image input through a camera, presenting recognition information on a part selected from the preview image as information of an interoperation application, and associating the recognition information with the interoperating application.

In accordance with another aspect of the present disclosure, an application information processing apparatus of a mobile terminal is provided. The apparatus includes a camera, a display unit which displays application information, and a control unit which includes a recognizer and displays, when a camera application is running, a preview image input through the camera, presents recognition information on a part selected from the preview image as information of an interoperation application, and associates the recognition information with the interoperating application.

### BRIEF DESCRIPTION OF THE DRAWINGS

The above and other aspects, features and advantages of the present invention will be mor e apparent from the following detailed description taken in conjunction with the accompanying d rawings, in which:
FIG. 1 is a block diagram illustrating a configuration of a mobile terminal according to an embodiment of the present invention;
FIG. 2 is a flowchart illustrating an application processing method according to an embodiment of the present invention;
FIGs. 3A and 3B are diagrams illustrating multiscreen arrangements of two application execution screens in the application information processing method according to an embodiment of the present invention;
FIGs. 4A to 4C are diagrams illustrating multiscreen arrangements for sharing the information recognized from an image picked by a camera application with other applications in the application information processing method according to an embodiment of the present invention;
FIGs. 5A and 5B are diagrams illustrating a mechanism of sharing information among applications in the mobile terminal according to an embodiment of the present invention;
FIG. 6 is a flowchart illustrating a procedure of sharing information among applications in the method of FIG. 5A;
FIGs. 7A to 7C are diagrams illustrating situations for explaining the procedure of FIG 6;
FIG. 8 is a flowchart illustrating a procedure of sharing information among applications in the method of FIG. 5B; and
FIG. 9 is a diagram illustrating screen displays for explaining the procedure of FIG. 8.

### DETAILED DESCRIPTION OF EMBODIMENTS OF THE PRESENT INVENTION

Embodiments of the present invention are described with reference to the accompanying drawings in detail. The same reference numbers are used throughout the drawings to refer to the same or like parts.

The present inventions relates to an apparatus and method for interoperating a camera application and other applications that are capable of recognizing external information or objects from the camera preview and using the recognized information in association with other applications or contents stored in the terminal.

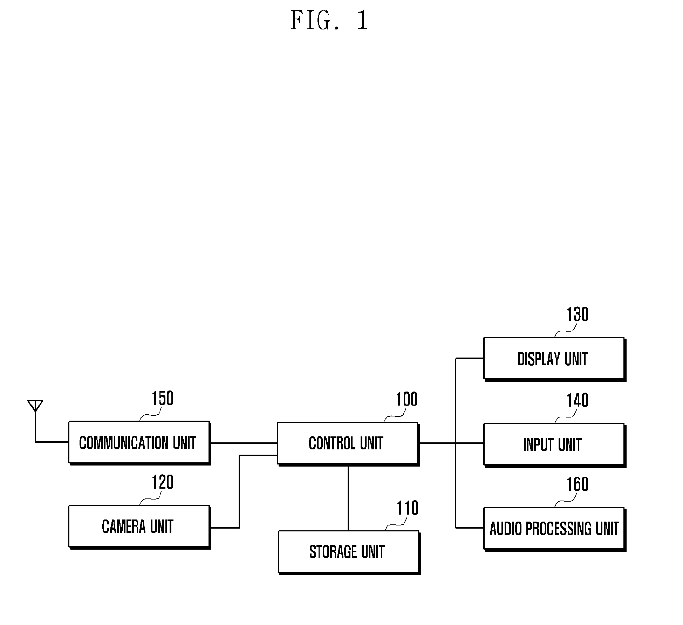

FIG. 1 is a block diagram illustrating a configuration of the mobile terminal according to an embodiment of the present invention. The mobile terminal may be any of various digital devices including a mobile phone, smartphone, MP3 player, tablet computer, etc.

Referring to FIG. 1, the communication unit 150 is responsible for communication with a base station or an Internet server. The communication unit 150 may include a transmitter for up-converting and amplifying the transmission signal and a receiver for low noise amplifying and down-converting the received signal. The communication unit 150 may include a modulator and a demodulator. Here, the modulator modulates the transmission signal to generate a modulation signal to the transmitter, and the demodulator demodulates the signal received by the receiver. The modulator/demodulator may be configured to support Long Term Evolution (LTE), Wideband Code Division Multiple Access (WCDMA), Global System for Mobile Communications (GSM), Wireless Fidelity (Wi-Fi), Wireless Broadband (WiBro), Near Field Communication (NFC), and Bluetooth, but is not limited thereto. In an embodiment of the present invention, it is assumed that the communication unit 150 includes LTE, Wi-Fi, NFC, and Bluetooth modules.

The camera unit 120 shoots a subject under the control of the control unit 100. Here, the image taken by the camera unit 120 may be a preview image. The camera 120 may include a high resolution rear camera mounted on the rear side of the terminal and a low resolution front camera mounted on the front side of the terminal.

The control unit 100 controls overall operations of the mobile terminal and, according to an embodiment of the present invention, monitors the preview image taken by the camera unit 120 to recognize certain information for use in other applications. The control unit 100 may further include an information recognizer. If a request for activating the camera unit 120 is received, the control unit 100 scans the preview image taken by the camera unit 120 to recognize the information from the preview image and apply the recognized information to another application.

The storage unit 110 may include a program memory for storing an Operating System (OS) of the terminal and application programs associated with the operations according to an embodiment of the present invention and a data memory for storing database tables associated with the operation of the terminal and data generated by the programs running on the terminal.

The display unit 130 displays information on an application running under the control of the control unit 100. The display unit 130 may be implemented with one of a Liquid Crystal Display (LCD) or Organic Light Emitting Diodes (OLED). The input unit 140 may be implemented with one of a capacitive touch panel and a resistive touch panel to generate the information on the position of a user's touch (hereinafter, referred to as a finger touch) to the control unit 100. The input unit 140 may further include an Electro-Magnetic Resonance (EMR) sensor pad to detect a pen touch and generates a corresponding input signal to the control unit 100. Here, the display unit 130 and the input unit 140 may be integrated into one component.

The audio processing unit 160 processes the audio signal generated in a communication mode and a camera shooting mode under the control of the control unit 100.

In the above-structured mobile terminal, the control unit 100 is capable of executing two or more applications simultaneously or sequentially and extracting certain information from a host application to share the information with other guest applications running concurrently. Here, by way of example, the host application may be a camera application. The camera application may be a camera-based information sharing application and operate in an operation mode distinguished from a normal camera operation mode. The camera-based information sharing application may be provided with a camera application menu for sharing via the menu. In this case, the camera application may be configured in the sharing configuration menu selected while a certain application is running, a certain file is display, or in the idle state, and the control unit 100 may detect a camera application execution request for sharing the information among the applications. The camera-based information sharing application may be executed on any of the screens allowing for configuration of the sharing function.

If the user requests execution of the camera-based information sharing application, the control unit 100 activates the camera unit 120 to recognize the information from the preview taken by the camera unit 120. Afterward, the control unit 100 controls to share the recognized information with other applications and executes the configured function with the shared information.

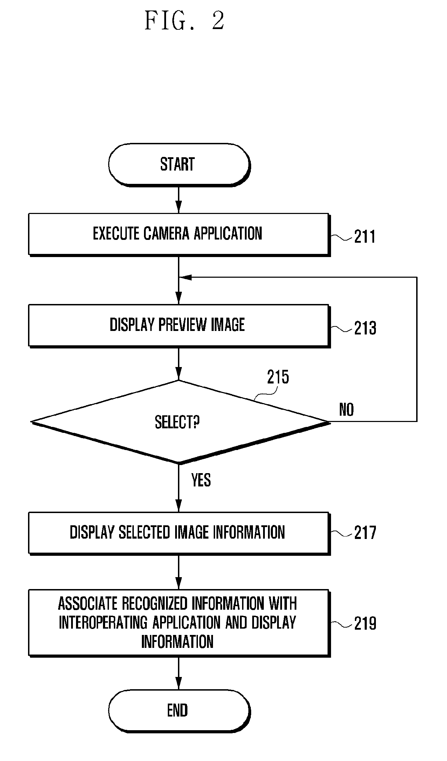

Referring to FIGs. 2, 3A, 3B, and 4A to 4C, the control unit 100 executes the camera application at step 211 of FIG. 2. At this time, other applications interoperating with the camera application may be executed at the same time or according to the information recognized by the camera application. Hereinafter, the term "camera application" denotes the application recognizing certain information from the camera preview image, and the term "interworking applications" denotes the applications capable of using the information recognized from the camera preview image.

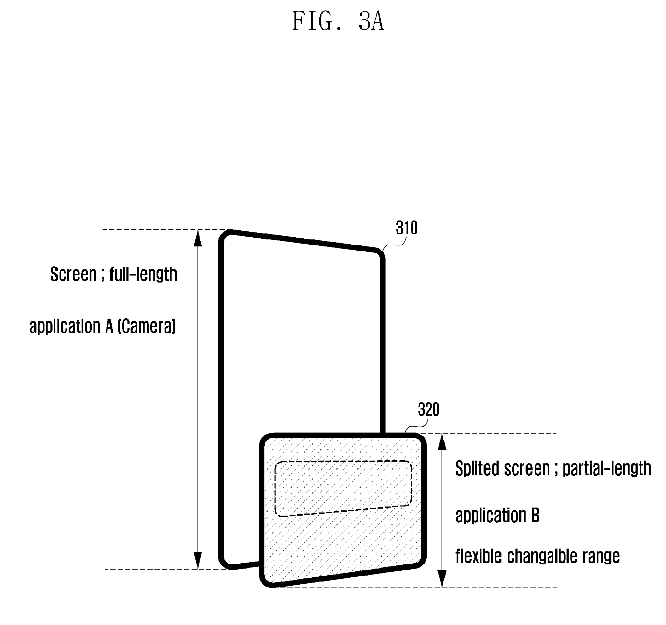

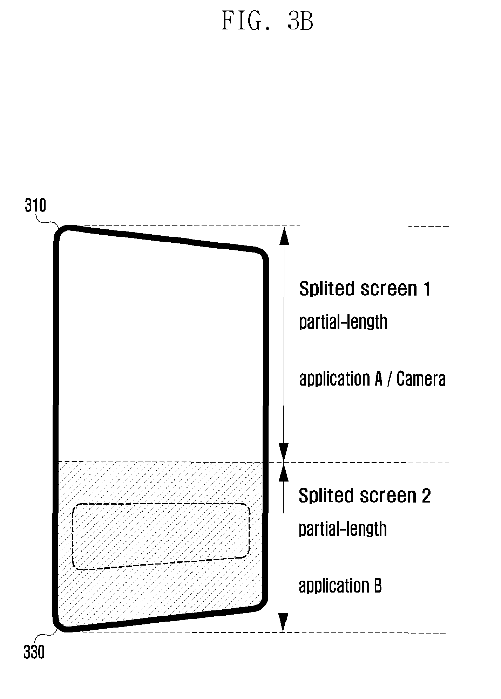

If the camera application is executed, the control unit 100 displays the preview image input through the camera unit 120 and the information recognized from the preview image on the display unit 130. When the camera application and an interoperating application are executed at the same time, the control unit 100 may control to simultaneously display the execution screens of the two applications on the display unit 130. FIGs. 3A and 3B show screen displays when the camera application and the interoperating application are simultaneously running on the terminal. In FIGs. 3A and 3B, application A may be the camera application, and application B may be the interoperating application. At this time, the screen layout may be designed to have a main screen and a sub-screen and, in FIGs. 3A and 3B, the main screen 310 is designated for the camera application and the sub-screens 320 and 330 are designated for interoperating application. In this case, the sub-screen may be displayed as a part of the main screen in the form of a pop-up window as denoted by reference number 320 in FIG. 3A or as a split style as denoted by reference number 330 in FIG. 3B. Although FIGs. 3A and 3B are directed to the case where the sub-screen is arranged bottom of the main screen, the sub-screen may be arranged to be located at any of the top, bottom, left, and right sides of the main screen. The display region (field range) of the sub-screen 320 (or 330) may have different shapes according to the application and may be changed flexibly according to the user input. Also, it may be possible to map the interoperating application to the main screen and the camera application to the sub-screen.

The user may display the preview image of the camera unit 120 on one screen while maintaining the main screen of the currently-running application on the display unit 130. The preview image of the camera unit 120 may include information received from outside of the mobile terminal, and the control unit 100 may recognize external information from the preview image and transfer or reflect the recognized information to the interoperation application.

Referring back to FIG. 2, the control unit 100 displays the preview image of the camera unit 120 and the information recognized from the preview image at step 213. If the user makes a selection input onto the preview image, the control unit 100 detects this at step 215 and displays the information related to the selection at step 217. At this time, the selection input is made to select the entire preview image or a part of the preview image. The control unit 100 sends the recognized information to the interoperating application and displays the execution screen of the interoperating application which includes the information on the display unit 130 at step 219. That is, the control unit 100 monitors the entire preview image or a part of the preview image of the camera unit 120 to recognize the outside information and transfers the recognized outside information to the interoperating application.

The operation of recognizing the information from the preview image of the camera unit 120 and transferring the information to the interoperating application or content is performed by the user action of a tap, drag and drop, multi-tap, auto-focusing, etc. In the case of using the tap gesture, if the user makes a tap gesture at a position of the preview image, the control unit 100 recognizes the information from the corresponding area selected by the tap gesture and applies/reflects the recognized information to the interoperating application/content. In the case of using the drag and drop gesture, the control unit 100 recognizes the information on the area of the preview image where the drag and drop gesture is detected and applies/reflects the recognized information to the interoperating application/content. In the case of using the multi-tap gesture, if the user makes a multi-tap gesture on the preview image of the camera unit 120, the control unit 100 recognizes the information at the touch positions of the multi-tap gesture and applies/reflects the recognized information to the interoperating application/content. In the case of using the auto-focusing, the user may activate the camera unit 120 while the interoperating application is running and focus on a certain position having the target information. In this case, the control unit 120 knows the currently running interoperating application and the position on the focused by the camera unit 120. The control unit 120 recognized the information from the focused area and reflects the recognizes information to the interoperating application/content.

If the information on the selected area of the preview image of the camera unit 120 is recognized, the control unit 100 may execute the interoperating application by inputting/transferring the recognized information to the interoperating application. That is, the control unit 100 may convert the recognized application to a format appropriate for the interoperating application and stores the external content in the format capable of being used in the current application.

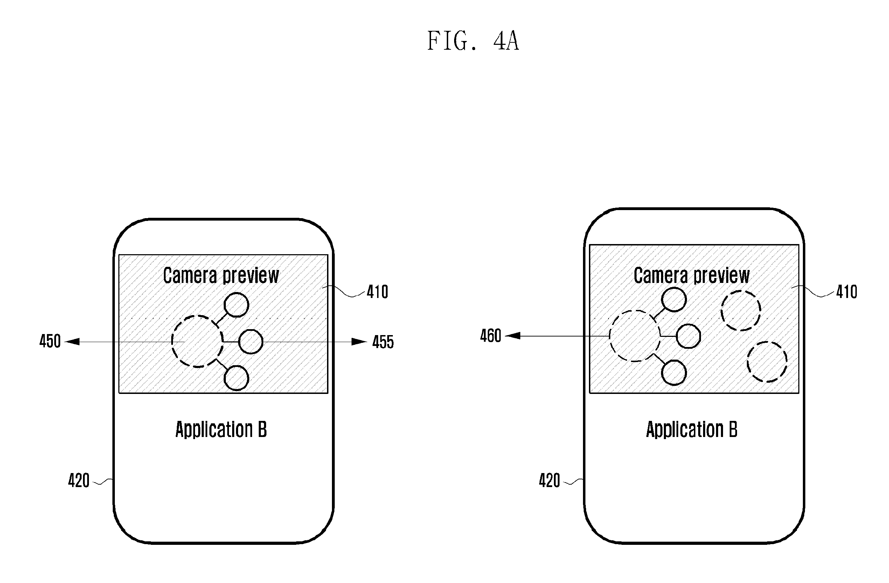

According to FIG. 2, the interoperating application may be executed along with the camera application simultaneously according to the recognition of the information from the area selected from the preview image. In the case where the camera application is executed while the interoperating application is running, the execution screens of the interoperating application and the camera application are displayed on the screen of the display unit 130 simultaneously as shown in FIGs. 4A to 4C. That is, if a request for executing the camera application is input for providing the information to be shared with the interoperating application while a specific application is running, the control unit 100 controls the two applications to run simultaneously while displaying the preview image of the camera unit 120 as a main screen or a sub-screen. At this time, the screen of the display unit 130 may be formed to have split screens as shown in FIG. 3B or to have the camera preview overlaid on the current application execution screen in the form of a pop-up window.

At this time, the control unit 100 monitors the outside image taken by the camera unit 120 in real time to recognize the information in association with the interoperating application and displays the recognized information on the display unit 130 as shown in FIG. 4A. The type of the information to be recognized may change depending on the interoperating application. In FIG. 4A, reference number 410 denotes the execution screen of the camera preview of the camera application, and reference number 420 denotes the execution screen of the interoperating application. At this time, the recognized information 450 is displayed on the display unit 130 in real time along with the related function 455. Due to the size constraint of the camera preview 410, the related function may be presented along with only the information 460 selected by the user according to the amount of recognized information.

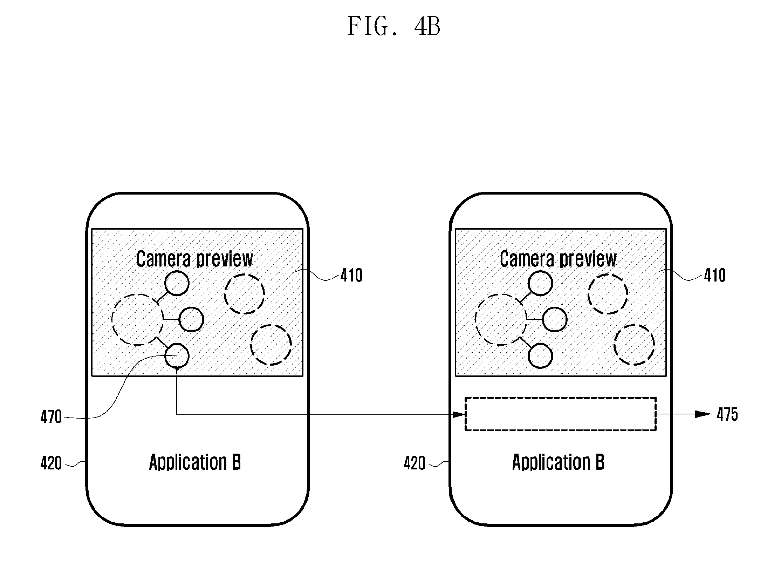

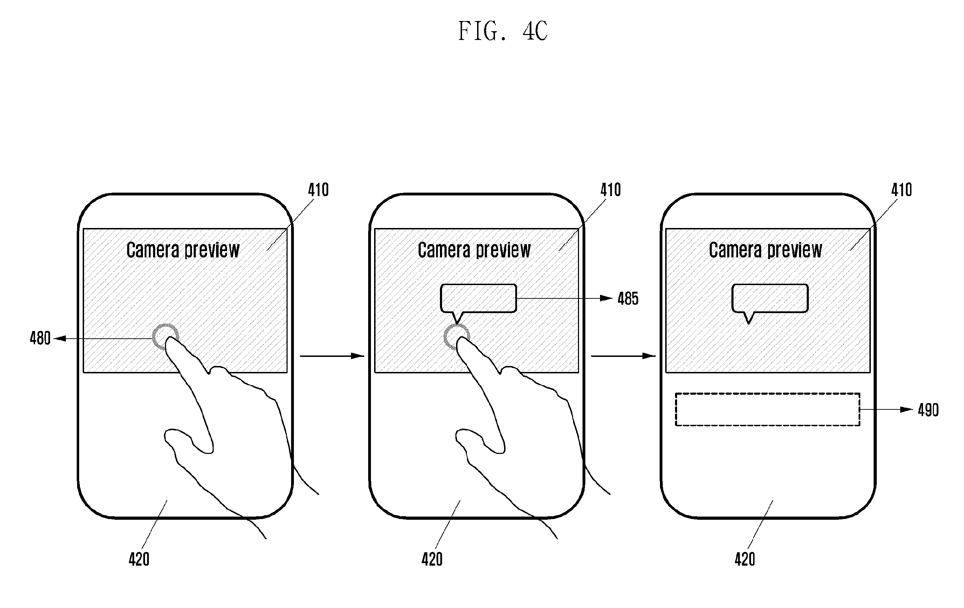

Referring to FIG. 4B, the information displayed on the camera preview 410 may be reflected to the interoperating application as denoted by reference number 475 or stored according to the user interaction as denoted by reference number 470 and, if necessary, converted to a formation appropriate for the interoperating application. For example, if a tap gesture is made on the information recognized from the camera preview 410 in the state of FIG. 4B as denoted by reference number 470, the information may be reflected to the execution screen of the interoperating application appropriately as denoted by reference number 475, or to the execution screen of the interoperating application in response to the user's drag and drop gesture. If it is difficult to display all the information on the camera preview in real time, only the information corresponding to the part selected by user interaction may be displayed as shown in FIG. 4C. That is, if the user selects a part of the camera preview 410 as denoted by reference number 480, the control unit 100 presents the information recognized at the selected area as denoted by reference number 485 and displays the recognized information 490 on the interoperating application execution screen 420.

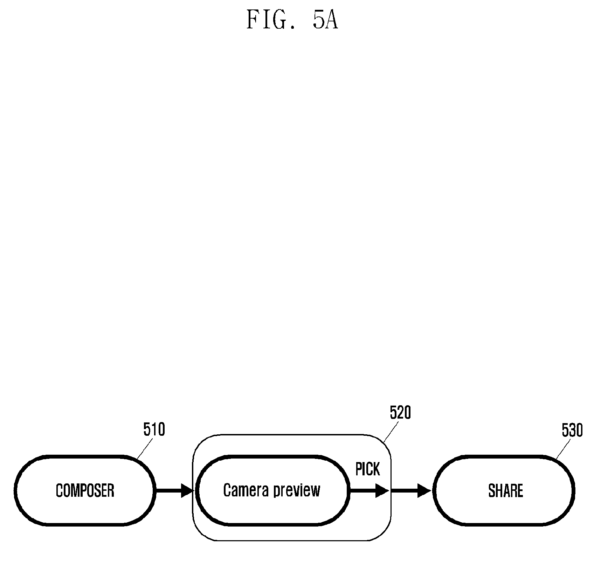

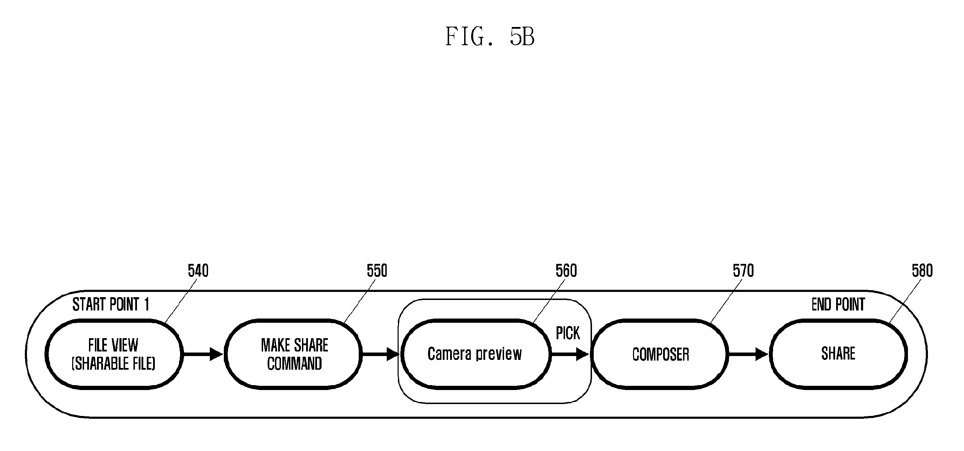

FIGs. 5A and 5B are diagrams illustrating a mechanism of sharing information among applications in the mobile terminal according to an embodiment of the present invention.

Referring to FIGs. 5A and 5B, the interoperating application may be executed along with the camera application simultaneously or according to the information recognized by the camera application. In the former case, the information may be shared in the way as shown in FIG. 5A. The camera application may be executed in the state that an interoperating application (composer) 510 is running, as denoted by reference number 520. In this case, the control unit 100 monitors the preview image input through the camera unit 120, picks the information to be transferred to the interoperating application as denoted by reference number 520, and reflects the information to the interoperating application for sharing as denoted by reference number 530.

Second, if a request for recognizing information with the activation of the camera unit 120 while displaying a file as denoted by reference number 540 in FIG. 5B, the control unit 100 detects the request at step 550 and activates the camera unit 120 at step 560. The control unit 100 monitors the preview image input through the camera unit 120 and picks the information to be transferred to the interoperating application from the preview image at step 560, executes the interoperating application at step 570, and transfers the picked information to the interoperating application for sharing at step 580.

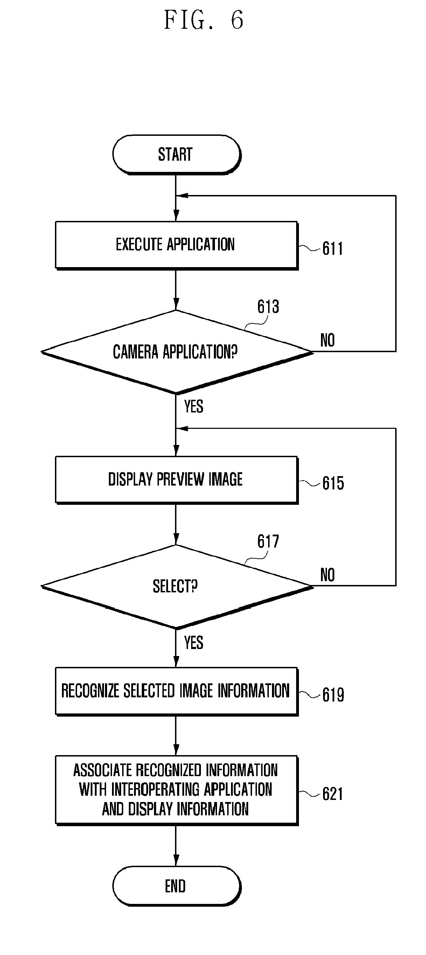

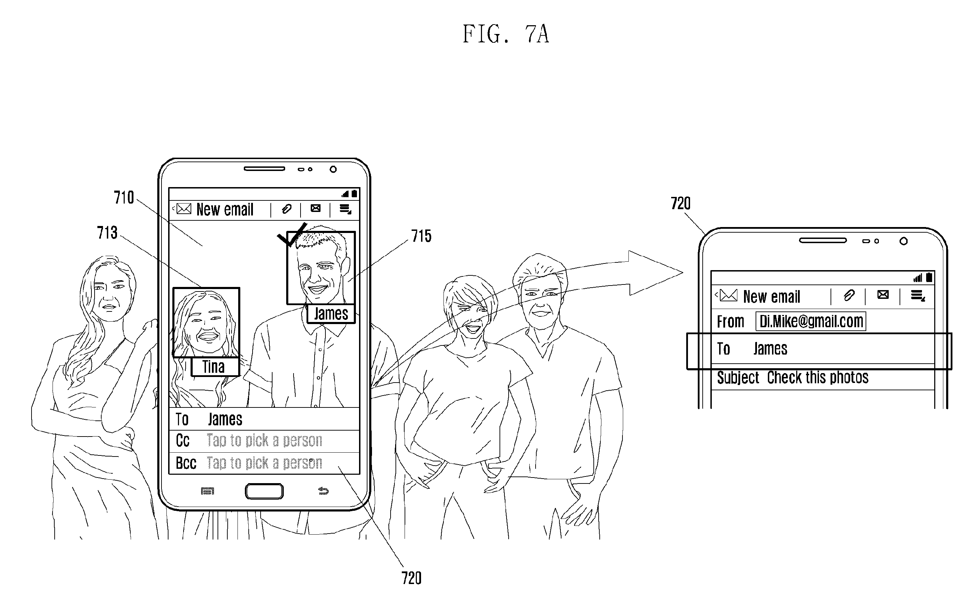

FIG. 6 is a flowchart illustrating a procedure of sharing information among applications according to the method of FIG. 5A. FIGs. 7A to 7C are diagrams illustrating situations for explaining the procedure of FIG 6.

Referring to FIGs. 6 and 7A to 7C, the control unit 100 executes an application capable of interoperating with the camera application at step 611. Here, the interoperating application may be any of communication applications (including a telephony application, data communication application, Social Networking Service (SNS) application, email, etc.), map applications for locating or registering a position, and a color setting application. The user may execute the camera application to acquire the information to be used in the currently running application. In this case, the user may activate the camera unit 120 and manipulate the terminal to shoot a subject having the target information. The control unit 100 detects the activation of the camera unit 120 at step 613 and controls the display unit 130 to display the previous image input through the camera unit 120 at step 615. If the preview image includes a person or text, a recognition function may be activated. At this time, the image displayed on the display unit 130 may be displayed under the control of the control unit 100 as shown in FIGs. 3A and 3B. The image is restricted in size according to the display unit 130 of the mobile terminal. While running the camera application, the control unit 100 processes the interoperating application on the background layer and the camera application on the foreground layer such that only the preview image of the camera 120 is displayed on the screen of the display unit 130 at step 615.

At step 617, if the user makes a selection input while the camera preview image is displayed, the control unit 100 recognizes certain information from the preview image at step 619 and displays the recognized information in association with the interoperating application at step 621. If the preview image includes a person or a text, the control unit 100 activates a recognition function while the preview image is displayed at step 615. For example, if the preview image includes people and the interoperating application shares information on the people, the control unit 100 recognizes the faces of the people in the preview image and references a data base (e.g. phonebook) to present information on the corresponding people. In this case, the control unit 100 may recognize a person's face from the preview image and present the information on that person recognized by the faces (e.g. phone number, email address, and SNS information). If the preview image includes a person, the control unit 100 may recognize the facial areas of the person and marks the recognized facial areas. If the user selects a facial area, the control unit 100 detects the selection at step 617 and retrieves the information on the person matching the selected face and displays the information in association with the interoperating application at step 621.

FIG. 7A shows a situation when the interoperating application is an email application. In this case, the control unit 100 executes the email application at step 611 and the user activates the camera unit 120 and manipulates the terminal to capture the scene including the people as shown in FIG. 7A. The control unit 100 detects this at step 613 and controls the display unit 130 to display the execution screens of the email application 720 and the camera application at step 615, as shown in FIG. 7A. When displaying the execution screen 710 of the camera application, the control unit 100 recognizes and marks the facial areas of the persons in the preview image as denoted by reference numbers 713 and 715. The control unit 100 compares the recognized faces with the facial images registered with the database to display the personal information matching the faces as denoted by reference numbers 713 and 715. If a specific person is selected as denoted by reference number 715, the control unit detects this at step 617 and retrieves and displays the information on the selected person (e.g. email address of the selected person) at step 619 and links the information on the person selected in the email application area at step 621. The control unit 100 loads the camera preview on the recipient input screen and, if the face-recognized persons are displayed, selects a person to fill out the recipient input field.

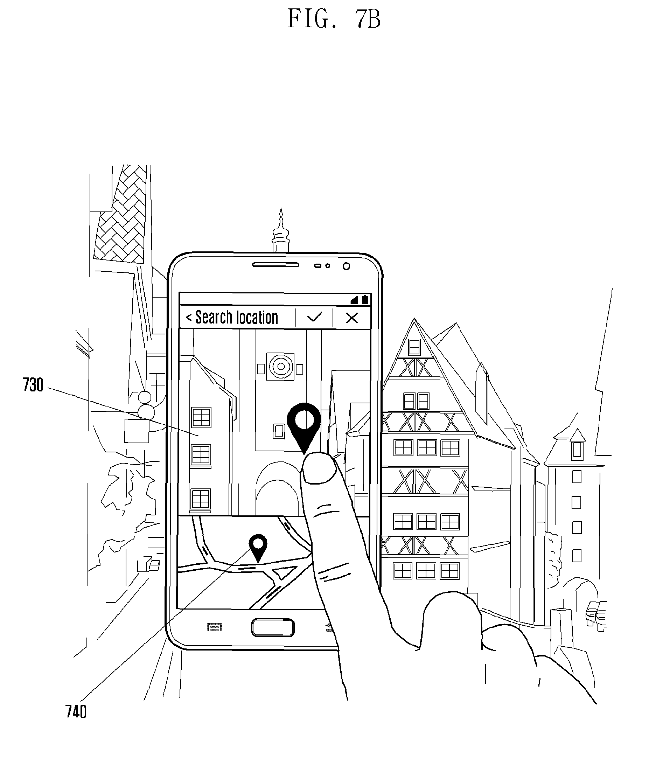

FIG. 7B shows a situation when the interoperating application is a map application registering a location by referencing a map. The control unit 100 executes a map application at step 611, and the user activates the camera unit 120 and manipulates the terminal to capture the scene of a location (e.g. a building or a street) as shown in FIG. 7B. Then the control unit 100 detects this at step 613 and controls the display unit 130 to display the execution screens of the map application 740 and the camera application 730 as shown in FIG. 7B at step 615. If the preview image input through the camera unit 120 includes any text, the control unit 100 may activate the text recognition function. If a selection input is made at a certain position, the control unit 100 detects this at step 617 and registers the selected location with the map at step 619. The selected location may be registered along with the text information associated with the selected location (e.g. phone number, building name, and address) and/or GPS information. In the case of using the text information, the control unit 100 may execute a navigation application to register the location checked using the text information recognized in the navigation application with the map. The location registration application may select a building or a location presented in the camera preview to fill out a location designation field.

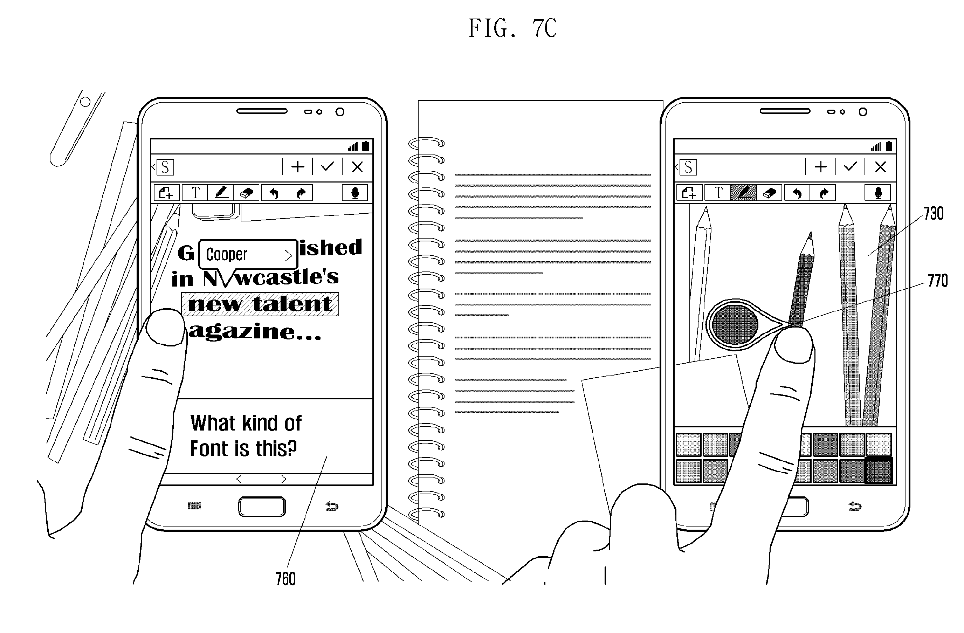

FIG. 7C shows a situation when the interoperating application is a font color designation application. In FIG. 7C, the interoperating application (here, the color designation application) running when executing the camera application is processed on the background layer and the camera application is on the foreground. In this case, the control unit 100 displays the execution screen of the font color destination application as denoted by reference number 760 of FIG. 7C at step 611. In this state, the user may activate the camera unit 120 at step 613 and manipulate the terminal to capture the scene including the subject with an intended color. The control unit 100 detects this at step 615 and processes the interoperating application on the background layer and controls the display unit 130 to display the execution screen of the camera application 730. Afterward, if a specific color is selected, the control unit 100 detects this at step 617 and shares the information on the selected color with the interoperating application at step 619. When the font style or color is designated, the control unit 100 may recognize the font of the text of a printed material by means of the camera and apply the style or color to the interoperating application.

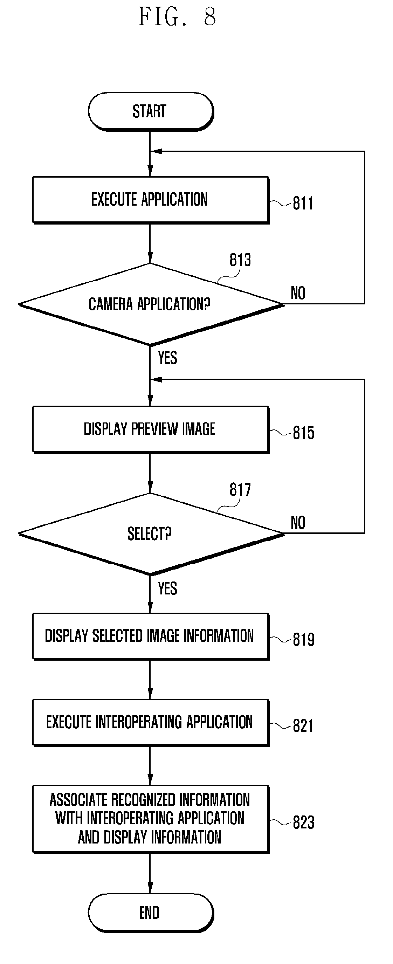

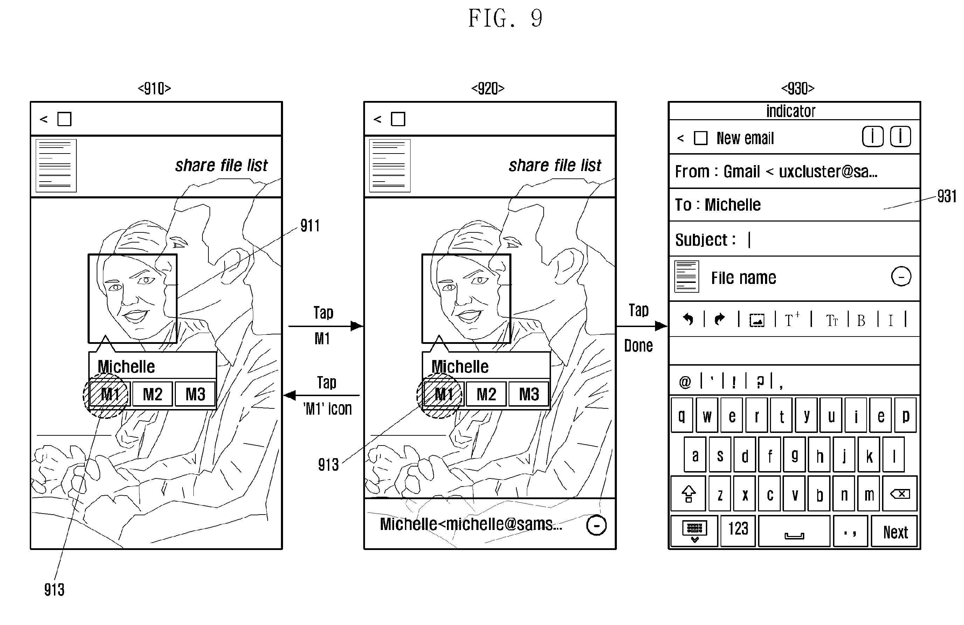

FIG. 8 is a flowchart illustrating a procedure of sharing information among applications according to the method of FIG. 5B. FIG. 9 is a diagram illustrating screen displays explaining the procedure of FIG. 8.

Referring to FIGs. 8 and 9, the control unit 100 executes a terminal function such as a file view application and display the execution screen on the display unit 130 at step 811. When there is a request for the camera application for sharing information among the applications in the idle state, step 811 may be omitted. If execution of the camera application is requested in the above state, the control unit 100 detects this at step 813, executes the camera unit 120, and displays the preview image input through the camera unit 120 on the display unit 130 at step 815. At this time, the display unit 130 may display the screen as shown in FIG. 3A or 3B under the control of the control unit 100. When the camera application is running, the control unit processes the interoperating application on the background layer and the camera application on the foreground layer such that the preview image of the camera unit 120 is displayed on the screen of the display unit 130 at step 815. At this time, the control unit 100 may monitor the preview image displayed on the display unit 130.

If the intended image is selected, the control unit 100 detects this at step 817 and displays the information recognized from the selected image at step 819. Here, the intended image may be selected by a user interaction, such as a tap, drag & drop, and multi-tap or auto-focusing, as described above. The control unit 100 may monitor the preview image to recognize information automatically and, in this case, the image selection step 817 may be omitted.

Afterward, the control unit 100 analyzes the information on the selected image, executes the interoperating application for sharing the information recognized from the image at step 821, and transfers the recognized information to the interoperating application for sharing at step 823.

Referring to FIG. 9, if the user requests execution of the camera application for sharing the information acquired from the preview image input through the camera unit 120 among the applications, the control unit 100 detects this at step 813 and displays the preview image on the screen at step 815. At this time, it is assumed that the preview image includes a person. In this case, if execution of the camera application is requested at step 811, the control unit 100 detects this at step 813 and displays the preview image as shown in screen 910 of FIG. 9. If an area of the image is selected as denoted by reference number 911, the control unit 100 detects this at step 817 and retrieves the information matching the face of the corresponding person from the database and displays the information as denoted by reference number 913. The face recognition may be performed at step 815 and, if a person is selected, it may be performed at step 819. At this time, the information on the person may be displayed as denoted by reference number 913. In FIG. 9, M denotes a link method, and it is assumed that method M1 indicates email, M3 indicates phone (MMS), and M2 indicates Messenger (e.g., chat on). At this time, if the user selects a link method, the control unit 100 detects this at step 817, displays the link method of the selected image (here, it is assumed that M1 is selected), executes the interoperating application corresponding to the link method (here, email application) at step 821, and shares the recognized information to the corresponding region of the interoperating application as denoted by reference number 931 of screen display 930 at step 823.

As shown in FIG. 9, in the case where the camera application is operating in the portrait shooting mode, the control unit 100 presents the name of the person whose face is recognized and the link method around the recognized face. In the screen 910, it is assumed that the methods M1 to M3 indicates Email, Phone (MMS), and messenger (e.g., Chat on) and they may be arranged in an order of usability. Here, the method account may be associated with the information registered with the database (e.g. phonebook and contact). At least one account may be associated with one method, and it is possible to register and display plural accounts with one method. In the case where one account is registered with the method, if the control unit 100 selects M1, the types of the remaining accounts are registered with different methods and thus, the remaining M2 and M3 are disabled. If M1 is selected, it is possible to cancel the account added at the bottom by tapping the disabled M1, and all of M1, M2, and M3 are enabled and Done is disabled.

As described above, the mobile terminal according to an embodiment of the present invention may configure a screen with the camera preview image for recognizing outside information along with the interoperating application and display the information recognized in association with the interoperating application state from the camera preview. The recognized image information is processed to be fit for the interoperating application and reflected to the interoperating application.

The mobile terminal equipped with a camera according to the present invention analyzes applications executed when the camera is activated, recognizes the image input through the camera, and links the information recognized from the image to another application which uses the information recognized from the image. If a certain area of the preview image input through the camera is selected, the mobile terminal recognizes certain information from the image and executes an application corresponding to the recognized information which is applied to the other application.

Although certain embodiments of the present invention have been described using specific terms, the specification and drawings are to be regarded in an illustrative rather than a restrictive sense in order to help understand the present invention. It is obvious to those skilled in the art that various modifications and changes can be made thereto without departing from the broader spirit and scope of the invention.

## Claims

1. An application information processing method of a mobile terminal, the method comprising:
displaying, when a camera application is running, a preview image input through a camera;
presenting recognition information on a part selected from the preview image as information of an interoperation application; and
associating the recognition information with the interoperating application.

2. The method of claim 1, further comprising executing the camera application in a state where the interoperating application is running, the interoperating application being the application sharing the recognition information acquired from the preview image.

3. The method of claim 2, wherein displaying the preview image comprises recognizing the information of the selected part from the preview image.

4. The method of claim 3, wherein displaying the preview image comprises displaying an execution screen of the interoperating application along with an execution screen of the camera application in one of pop-up, split, and background layer formats.

5. The method of claim 4, wherein the part is selected with one of a tap, a drag and drop, and multi-tap gestures.

6. The method of claim 5, wherein the interoperating application is a communication application, and wherein displaying the preview image comprises recognizing a face from the preview image and retrieving contact information matching the face from a database, such that the contact information is presented.

7. The method of claim 1, wherein displaying the preview image comprises executing the interoperating application for sharing the recognition information on the part selected from the preview image.

8. The method of claim 7, wherein displaying the preview image comprises acquiring information capable of executing at least one interoperating application from the preview image and presenting the acquired information.

9. The method of claim 8, wherein the preview image includes at least one person, and displaying the preview image comprises recognizing a face of the at least one person and presenting contact information of the face-recognized person.

10. An application information processing apparatus of a mobile terminal, the apparatus comprising:
a camera;
a display unit which displays application information; and
a control unit which includes a recognizer and displays, when a camera application is running, a preview image input through the camera, presents recognition information on a part selected from the preview image as information of an interoperation application, and associates the recognition information with the interoperating application.

11. The method of claim 10, wherein the control unit executes the camera application in a state where the interoperating application is running, the interoperating application being the application sharing the recognition information acquired from the preview image.

12. The apparatus of claim 11, wherein the control unit recognizes the information of the selected part from the preview image and displays the information along with the preview image.

13. The apparatus of claim 12, wherein the control unit controls the display unit to display an execution screen of the interoperating application along with an execution screen of the camera application in one of pop-up, split, and background layer formats.

14. The apparatus of claim 13, wherein the control unit selects the part in response to one of a tap, a drag and drop, and multi-tap gestures.

15. The apparatus of claim 14, further comprising a storage unit which stores facial images of at least one person and contact information on the at least one person, wherein the control unit recognizes, when the interoperating application is a communication application, a face from the preview image and retrieves contact information matching the face from the storage unit, such that the contact information is presented.
